# EUROPÄISCHE PATENTANMELDUNG

(11) **EP 1 170 645 A2**
(43) Veröffentlichungstag der Anmeldung: **09.01.2002**
(21) Anmeldenummer: 01116196.5
(22) Anmeldetag: 04.07.2001
(51) Int. Cl.: G05B 19/042

(54) **Verfahren und Einrichtung zum Überwachen und Steuern von Maschinen bzw. maschinellen Anlagen**

(30) Priorität: 05.07.2000 DE 10032533
(71) Anmelder: K.A. SCHMERSAL GmbH & Co., D-42279 Wuppertal (DE)
(72) Erfinder: Hoepken, Hermann, 45549 Sprockhövel (DE)
(74) Vertreter: Sparing - Röhl - Henseler Patentanwälte

(57) **Zusammenfassung**

Die Erfindung betrifft ein Verfahren und eine Einrichtung zum Überwachen und Steuern von Maschinen bzw. maschinellen Anlagen mittels Eingangssignale liefernden Slaves (5) von Sensoren, die über einen Zweileiterbus (1) mit einem Master (3) und einem redundanten Sicherheitsmonitor (7) verbunden sind, wobei der Master (3) die Slaves (5) zyklisch abfragt und der Sicherheitsmonitor (7) überwacht, ob die Abfrage innerhalb einer vorbestimmten Zeit beendet ist und alle Adressen der Slaves (5) abgearbeitet werden, wobei der Sicherheitsmonitor (7) Informationen der Slaves (5) auf Unverfälschtheit anhand von wechselnden Bitmustern prüft und unverfälschte Informationen miteinander zu sicherheitsrelevanten Ausgangssignalen verknüpft. Hierbei stellt der Sicherheitsmonitor (7) als Eingangsignale liefernder Slave die Ausgangssignale zur Abgabe auf den Zweileiterbus (1) auf Abfrage durch den Master (3) mit einem Bitmuster zur Absicherung einer Überprüfung auf Unverfälschtheit bereit, wobei Slaves (6) zur sicheren Ausgangssignalerzeugung für Ausgangspfade vorgesehen sind, der Master (3) in seinem Abfragezyklus entsprechende Adressen abfragt und die Slaves (6) zur sicheren Ausgangssignalerzeugung bei ihrer Adresse die Information der Ausgangssignale des Sicherheitsmonitors (7) auf Unverfälschtheit prüfen.

## Beschreibung

Die Erfindung betrifft ein Verfahren und eine Einrichtung zum Überwachen und Steuern von Maschinen bzw. maschinellen Anlagen gemäß den Oberbegriffen der Ansprüche 1 bzw. 3.

Ein Aktuator-Sensor-Interface-System (AS-i-System), wie es beispielsweise in Kriesel, W., Madelung O.W., AS-Interface, Das Aktuator-Sensor-Interface für die Automatisierung, Hanser-Verlag, 2. Überarb. Auflage, 1999, beschrieben ist, umfaßt entsprechend einer AS-i-Norm einen Zweileiterbus zur Daten- und Energierübertragung, einen daran angeschlossenen Master, der zur Datenübertragung dient, die das logische und zeitliche Verhalten auf dem Zweileiterbus steuert und als Verbindungsglied zwischen einem Host und Peripherie dienen kann, ein Netzteil zur Stromversorgung und Slaves in Form von Sensoren und Aktuatoren für Schaltzustände. Der Master übernimmt nach einem starren Protokoll die Datenübertragung und das Systemmanagement wie etwa die Aufnahme neu hinzugekommener Slaves, Parametrierung, Abfrage der Konfiguration und spricht in einer zyklischen Arbeitsweise mit einer Zykluszeit < 5ms in vorbestimmter Adressenreihenfolge alle vorhandenen Slaves mit Datenaufrufen an und erwartet die Antwort der Slaves, wobei im Datenaufruf als auch in der Antwort 4-Bit-Nutzdaten enthalten sind. In jedem Slave sind eine Sende- und Empfangsschaltung, ein Ablaufsteuerwerk sowie ein nichtflüchtiger Speicher (EEPROM) zur Aufnahme der Adresse und der Konfigurationsdaten vorgesehen. Die Adresse jedes Slaves wird bei Inbetriebnahme hiervon auf eine gültige Betriebsadresse gesetzt.

Wenn sicherheitsrelevante Slaves eingesetzt werden, erfolgt die Übertragung von sicherheitsrelevanter Information über Datentelegramme, wobei die Interpretation hiervon mittels eines Sicherheitsmonitors vorgenommen wird, der als separates Gerät ausgeführt sein kann und rein passiv am Zweileiterbus ist. Der Sicherheitsmonitor überwacht, ob die Abfrage der Slaves innerhalb einer vorbestimmten Zeit beendet ist und alle Adressen der Slaves abgearbeitet worden sind. Die Auswertung der sicherheitsrelevanten, Eingangssignale liefernden Slaves erfolgt ebenfalls im Sicherheitsmonitor, wobei zunächst ein sicheres Prozeßabbild, in dem die Zustände der Slaves abgelegt sind (wobei pro Slave neben Ein- und Auszustand auch Informationen über Zwischenzustände vorhanden sein können, die sich aus der dynamischen Codierung ergeben), erstellt und dieses dann ausgewertet wird, um die Zustände von Abschaltgruppen gemäß vorbestimmter Spezifikation zu bestimmen.

Der Sicherheitsmonitor, der zum Liefern der gewünschten Sicherheit redundant, d.h. mindestens zweikanalig ist, weist zwei sichere, an jeweils einen ebenfalls redundant aufgebauten Relaispfad gekoppelte Ausgänge auf. Wenn man jedoch weitere Ausgangspfade benötigt, so ist hierzu eine entsprechende weitere Anzahl von Sicherheitsmonitoren mit entsprechenden Verdrahtungen zum Zweileiterbus vorzusehen, wodurch der Aufwand beträchtlich vergrößert wird.

Aufgabe der Erfindung ist es, ein Verfahren und eine Einrichtung nach den Oberbegriffen der Ansprüche 1 bzw. 3 zu schaffen, die eine größere Anzahl von sicheren Ausgangspfaden ohne großen apparativen und montagemäßigen Aufwand ermöglichen.

Diese Aufgabe wird entsprechend dem kennzeichnenden Teil des Anspruchs 1 bzw. 3 gelöst.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 zeigt ein Prinzipschaltbild einer Einrichtung zum Überwachen und Steuern einer Maschine oder maschinellen Anlage.

Fig. 2 zeigt schematisch eine Datenübertragung innerhalb der Einrichtung von Fig. 1.

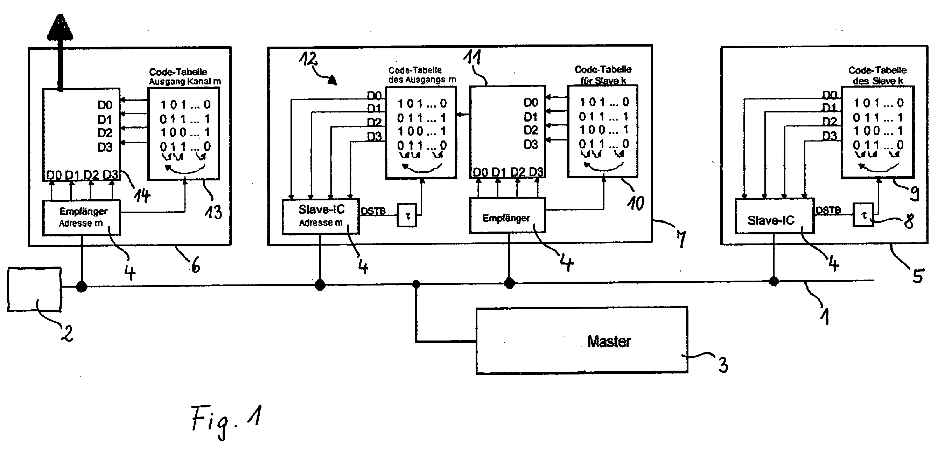

Die in Fig. 1 dargestellte Einrichtung umfaßt einen Zweidrahtbus 1 zur Daten-und gegebenenfalls zur Energieübertragung, der an ein Netzteil 2 angeschlossen ist. An den Zweidrahtbus 1 ist ein Master 3 angeschlossen, der zur Datenübertragung dient, die das logische und zeitliche Verhalten auf dem Zweileiterbus 1 steuert und als Verbindungsglied etwa zwischen einem Host und Peripherie dienen kann. Beim Zweidrahtbus 1 und dem Master 3 handelt es sich um nicht sichere Komponenten.

An den Zweidrahtbus 1 sind zusätzlich über jeweils ein Interface 4 sowohl Eingangssignale liefernde Slaves 5 als auch Ausgangssignale liefernde Slaves 6 und ferner ein redundanter Sicherheitsmonitor 7 angeschlossen (von den Slaves 6, 7 ist jeweils nur einer dargestellt). Bei den Eingangsignale liefernden Slaves 5 kann es sich beispielsweise um solche von Sicherheitsschaltern an Türen, Klappen od.dgl. von Zutrittsöffnungen in Absperrungen wie Umzäunungen, Gehäusen etc. von Maschinen oder maschinellen Anlagen handeln, die, wenn sie arbeiten, bei einem Zutritt ein Gefährdungspotential für Beschäftigte darstellen, so daß sichergestellt werden soll, daß die Türen, Klappen od.dgl. bei laufender Maschine nicht geöffnet werden können, bzw. dann, wenn irgendwo ein Fehler aufgrund einer Fehlfunktion eines Schalters, eines Kurz- oder Queschlusses od.dgl. die Maschine abgestellt wird. Bei den Slaves 5 kann es sich auch um solche von Lichttastern, die das Eindringen eines Hindernisses einen geschützten Raumbereich feststellen, Lichtschranken oder Not-Aus-Tastern handeln. Außerdem können nicht sicherheitsrelevante Slaves (nicht dargestellt), die dann nur vom Master 3 kontrolliert werden, an den Zweidrahtbus 1 angeschlossen sein.

Jeder Slave 5 umfaßt neben seinem Interface 4 einen Zähler 9 (insbesondere einen modulo8-Zähler) mit einen Speicher mit acht Adressen und 4 Bit Breite mit den Werten einer Folge von beispielsweise 8 mal 4 Datenbits, von denen bei zyklischer Abfrage der Slaves 5, 6 durch de Master 3 der jeweils nächste Wert der Folge übertragen wird, so daß nach acht Zyklen die Folge vollständig übertragen ist. Erkennt das jeweilige Slave 5 einen Datenaufruf für die ihm zugeordnete Adresse, so sendet es die in diesem Beispiel vier an den Eingängen liegenden Datenbits in seiner Antwort. Gleichzeitig erzeugt das Interface 4 über ein Zeitglied 8 ein verzögertes Datenstrobesignal DSTB zum Weiterschalten des Zählers 9, so daß beim nächsten Datenaufruf im nächsten Zyklus der nachfolgende Wert der Folge in der Antwort übertragen wird. Dabei ergibt sich folgender Datensatz:

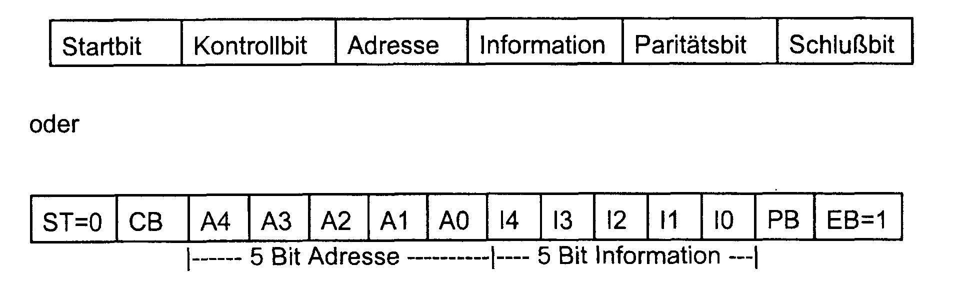

Hierbei hat jeder Slave 5 zwei mit einer zugehörigen Sensorik verbundene Eingangskanäle, die jeweils entsprechende Informationsbits an das Interface 4 abgeben.

Der Sicherheitsmonitor 7 prüft die Datensätze des Masters 3 auf inhaltliche und zeitlichliche Richtigkeit der Übertragung, wobei für die Masterabfrage die obigen 14 Bit verwendet werden. Danach ist eine Masterpause von beispielsweise 3 Bit, dann eine Slaveantwort von 7 Bit und eine Sendepause von 2 Bit vorgesehen. Hieraus ergibt sich entsprechend der Taktzeit und der Anzahl der anzufragenden Slaves 5, 6 eine Maximalzeit, die von dem Sicherheitsmonitor 7 überwacht wird. Damit wird die Adressierung und Datenabfrage aller angemeldeter sicherheitsrelevanter Slaves 5 innerhalb einer vorgegebenen Zeit geprüft.

Die Slaves 5 legen nun ihrerseits ein spezielles, mit jeder Abfrage wechselndes Bitmuster bei dem Aufruf durch den Master 3 auf den Zweidrahtbus 1.

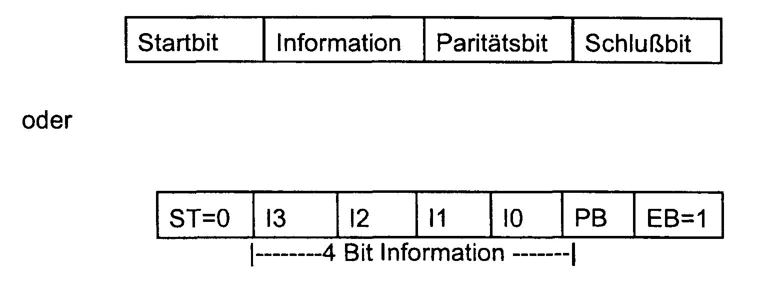

Der Sicherheitsmonitor 7 empfängt auch diese Information über sein Interface 4 und übernimmt nun die Prüfung dieser Information und den Vergleich des gesendeten Bitmusters mit einem zu jedem Slave 5 in einem Speicher 10 gespeicherten Bitmuster mittels eines entsprechenden Vergleichers 11.

(Die Zuordnung, welcher Slave 5 welches Bitmuster sendet, ist bei der Herstellung jedem Gerät fest einprogrammiert. Bei der Konfiguration des Systems wird von jedem Slave 5 das jeweilige Bitmuster gelesen, dieses mit einer Code-Tabelle von freigegebenen Bitmustern verglichen und bei Übereinstimmung mit einem Datensatz in dieser Code-Tabelle das erkannte Bitmuster für jeden einzelnen Slave 5 im Sicherheitsmonitor 7 gespeichert. Sobald der Sicherheitsmonitor 7 einen kompletten Bitmustersatz von einem angemeldeten Slave 5 erkannt hat, gilt dessen Information als gesichert freigegeben.)

Aus den verschiedenen, als unverfälscht und damit gesichert angesehenen Informationen bildet der Sicherheitsmonitor 7 ein Prozeßabbild, aus dem sichere Ausgangspfade 15 angesteuert werden.

Dazu wird die Information des Prozeßabbildes auf einen im Sicherheitsmonitor 7 emulierten, sicherheitsrelevanten Slave 12, dessen Funktion analog der des Slaves 5 ist, abgebildet. Dies führt dazu, daß der Sicherheitsmonitor über seinen internen Slave 12 bei Abfrage spezieller, für sichere Ausgangspfade 15 vorgesehener Adressen durch den Master 3 seinerseits ein wechselndes Bitmuster über das entsprechende Interface 4 auf den Zweidrahtbus 1 legt.

Die speziellen, für sichere Ausgangspfade 15 vorgesehenen Adressen werden ihrerseits durch die Slaves 6 ebenso wie ihr Zeitverhalten überprüft, wie es vorher in Bezug auf die Adressen und das Zeitverhalten des Masters 3 durch den Sicherheitsmonitor 7 geschehen ist. Dementsprechend umfassen die Slaves 6 neben einem Interface 4 einen Speicher 13 für eine Code-Tabelle und einen Vergleicher 14. Die Slaves 6 sind daher insoweit mit dem Sicherheitsmonitor 7 funktionsgleich, allerdings stellen sie keine Verknüpfungen für ein Prozeßabbild her. Erst nach einem kompletten Prüfzyklus werden bei Richtigkeit aller Datenpakete nun die Ausgangspfade 15 der Slaves 6 freigegeben. Damit wird sichergestellt, daß die Datenübertragung insgesamt geprüft und abgesichert ist.

Auf diese Weise wird eine dezentrale Ansteuerung sicherer Slaves 6 für Ausgangspfade 15 mit einem einzigen Sicherheitsmonitor 7 am Zweidrahtbus 1 möglich.

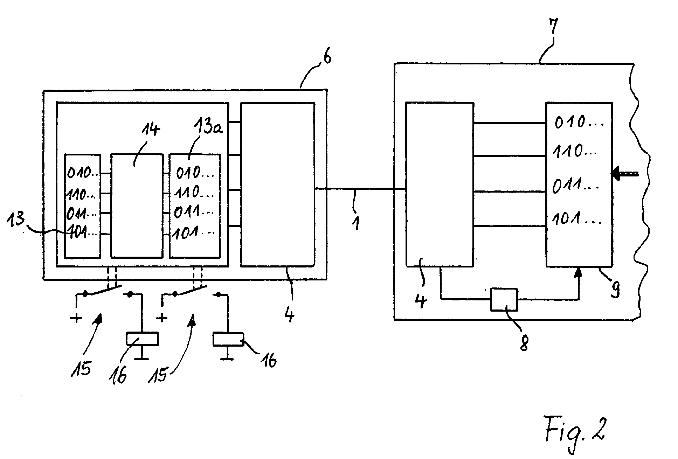

Bei Verwendung von Eingabe/Ausgabe-Interfaces 4 kann der Sicherheitsmonitor 7 ein einziges Interface 4 aufweisen, wobei außerdem die Funktion des Slaves 12 durch entsprechende Konfiguration des Sicherheitsmonitors 7, der dann für jeden der Slaves 6 eine zusätzliche Verknüpfungsebene besitzt und diesbezüglich wie ein Eingangssignale liefernder Slave agiert, ohne einen Slavebaustein als solchem erreicht werden kann, wobei jede der Verknüpfungsebenen ihr Verknüpfungsergebnis auf eine der zugeordneten Adressen der Slaves 6 legt, vgl. auch Fig. 2, in der auch die übertragenen Folgen 13a, die vom Vergleicher 14 mit der Code-Tabelle des Speichers 13 verglichen werden, dargestellt ist.

Spricht der Master 3 eine der Adressen der Slaves 6 an, legt der Sicherheitsmonitor 7 als "sicherer Slave" das Ergebnis der zugehörigen Verknüpfung in Form eines zugehörigen Bitmusters auf den Zweidrahtbus 1. Gleichzeitig "lauscht" der auf dieser Adresse befindliche Slave 6 seinerseits als "sicherer Monitor", aber ohne eigene Verknüpfungsebene, am Zweidrahtbus 1. Ist die Sicherheitsbedingung erfüllt, schaltet der Slave 6 seine Ausgangspfade 15 ein.

Die Konfiguration des System wird am Sicherheitsmonitor 7 vorgenommen. Die Slaves 6, deren Ausgangspfade 15 zum Ansteuern von Elementen 16 wie Relais, Elektromagneten od.dgl. dienen, werden nur adressiert und projektiert.

Die dynamische Übertragung zwischen Sicherheitsmonitor 7 und Slave 6 ist in Fig. 2 schematisch dargestellt.

Die Informationsbits 10 bis 13 bilden ein Codewort (in der AS-i-Norm signalisiert das Codewort 0000 den Aus-Zustand, etwa Not-Aus-Taster gedrückt oder Lichtschranke unterbrochen, während das Codewort 1111 reserviert ist). Der Ein-Zustand wird bei den sicheren Ausgangsslaves durch eine Folge von speziellen, den reservierten Adressen fest zugeordneten Codewörtern signalisiert. Die Codewörter bei den sicheren Ausgängen bilden eine zyklische Folge der Länge 4. Zwei aufeinanderfolgende Codewörter unterscheiden in mindestens einem Bit. Jedes Codewort hat einen eindeutigen Nachfolger, es kommt nur einmal in der Folge vor. Innerhalb einer Folge muß jedes Bit mindestens einem 1 und einmal 0 sein. Zwei Bits dürfen nicht über die gesamte Länge der Folge hinweg gleich sein.

Nach einem Aufruf durch den Master 3 schaltet der Slave 5 auf das nächste Wort der Folge weiter. Entsprechendes erfolgt im Sicherheitsmonitor 7. Gemäß AS-i-Norm ist hierbei vorgesehen, daß eine Verzögerung des Tabellenumschaltsignals von 200 bis 280 µs durch das Zeitglied 8 sicherstellt, daß in einem Zyklus auch bei einer gestörten Slaveantwort, bei der der Master 3 eine unmittelbare Wiederholung durchführen würde, die Folge nur um einen Schritt weitergeschaltet wird. Dies bedeutet, daß das dynamische Signal einem genau festgelegten Protokoll entspricht. Der Sicherheitsmonitor 7 erkennt jede Abweichung von diesem Protokoll und löst eine vorbestimmte Reaktion aus, beispielsweise das Abschalten des betreffenden Maschinenteils. Im übrigen wird auf die AS-i-Norm verwiesen.

Die Kopplung zwischen dem Sicherheitsmonitors 7 ebenso wie der Slaves 6 und gegebenenfalls der Slaves 5 an den Zweidrahtbus 1 kann gegebenenfalls über Optokoppler als Eingangsstufe des jeweiligen Interface 4 erfolgen, in dem die Signale zur weiteren Verarbeitung aufbereitet werden.

## Patentansprüche

1. Verfahren zum Überwachen und Steuern von Maschinen bzw. maschinellen Anlagen mittels Eingangssignale liefernden Slaves (5) von Sensoren, die über einen Zweileiterbus (1) mit einem Master (3) und einem redundanten Sicherheitsmonitor (7) verbunden sind, wobei der Master (3) die Slaves (5) zyklisch abfragt und der Sicherheitsmonitor (7) überwacht, ob die Abfrage innerhalb einer vorbestimmten Zeit beendet ist und alle Adressen der Slaves (5) abgearbeitet werden, wobei der Sicherheitsmonitor (7) Informationen der Slaves (5) auf Unverfälschtheit anhand von wechselnden Bitmustern prüft und unverfälschte Informationen miteinander zu sicherheitsrelevanten Ausgangssignalen verknüpft, **dadurch gekennzeichnet, daß** der Sicherheitsmonitor (7) seinerseits als Eingangsignale liefernder Slave (12) die Ausgangssignale aus seiner Verknüpfung zur Abgabe auf den Zweileiterbus (1) auf Abfrage durch den Master (3) mit einem Bitmuster zur Absicherung einer Überprüfung auf Unverfälschtheit bereitstellt, Slaves (6) zur sicheren Ausgangssignalerzeugung für Ausgangspfade (15) vorgesehen sind, der Master (3) in seinem Abfragezyklus entsprechende Adressen abfragt und die Slaves (6) zur sicheren Ausgangssignalerzeugung bei ihrer Adresse die Information der Ausgangssignale des Sicherheitsmonitors (7) auf Unverfälschtheit prüfen.

2. Verfahren nach Anspruch 1, **dadurch gekennzeichnet, daß** die Slaves (6) zur sicheren Ausgangssignalerzeugung überwacht, ob die Abfrage durch den Master (3) innerhalb der vorbestimmten Zeit beendet ist.

3. Einrichtung zum Überwachen und Steuern von Maschinen bzw. maschinellen Anlagen mittels Slaves (5) von Sensoren, die über einen Zweileiterbus (1) mit einem Master (3) und einem redundanten Sicherheitsmonitor (7) verbunden sind, wobei die Slaves (5) durch den Master (3) zyklisch abfragbar sind und durch den Sicherheitsmonitor (7) überwachbar ist, ob die Abfrage innerhalb einer vorbestimmten Zeit beendet ist und alle Adressen der Slaves (5) abgearbeitet werden, wobei der Sicherheitsmonitor (7) Informationen der Slaves (5) auf Unverfälschtheit anhand von wechselnden Bitmustern prüft und unverfälschte Informationen miteinander zu sicherheitsrelevanten Ausgangssignalen verknüpft, **dadurch gekennzeichnet, daß** der Sicherheitsmonitor (7) gleichzeitig ein Eingangsignale liefernder Slave ist, der die Ausgangssignale zur Abgabe auf den Zweileiterbus (1) auf Abfrage durch den Master (3) mit einem Bitmuster zur Absicherung einer Überprüfung auf Unverfälschtheit bereitstellt, wobei Slaves (6) zur sicheren Ausgangssignalerzeugung vorgesehen sind und diesen und dem Sicherheitsmonitor (7) im Master (3) eine entsprechende gleiche Adresse zugeordnet ist und durch die Slaves (6) zur sicheren Ausgangssignalerzeugung bei ihrer Adresse die Information der Ausgangssignale des Sicherheitsmonitors (7) auf Unverfälschtheit prüfbar sind.

4. Einrichtung nach Anspruch 3, **dadurch gekennzeichnet, daß** der Sicherheitsmonitor (7) seine Ausgangsinformation über einen Eingangsignale für die Slaves (6) zur sicheren Ausgangsignalerzeugung liefernden Slave auf den Zweileiterbus (1) gibt.

5. Einrichtung nach Anspruch 3, **dadurch gekennzeichnet, daß** der Sicherheitsmonitor (7) einen Speicher (10) umfaßt, der neben Bitmustern für Slaves (5, 6) ein den Sicherheitsmonitor (7) identifizierendes Bitmuster enthält.

6. Einrichtung nach einem der Ansprüche 3 bis 5, **dadurch gekennzeichnet, daß** zumindest der Sicherheitsmonitor (7) mit dem Zweidrahtbus (1) über ein Eingabe-/Ausgabe-lnterface (4) gekoppelt ist.

7. Slave (6) zur sicheren Ausgangssignalerzeugung für eine Einrichtung zum Überwachen und Steuern von Maschinen bzw. maschinellen Anlagen mittels Slaves (5, 6) von Sensoren und Aktuatoren, mit einem Speicher (13) für ein Bitmuster und einem Vergleicher (14) zum Vergleichen eines über einen Zweileiterbus (1) empfangenen Bitmusters mit dem gespeicherten, wobei ein Ausgangspfad mit dem Vergleicher (14) verbunden ist.

8. Slave nach Anspruch 7, **dadurch gekennzeichnet, daß** die Zeitdauer eines Abfragezyklus überprüfbar ist.
